# EUROPÄISCHE PATENTSCHRIFT

(11) **EP 0 811 780 B1**
(45) Veröffentlichungstag und Bekanntmachung des Hinweises auf die Patenterteilung: **04.10.2001**
(21) Anmeldenummer: 97108978.4
(22) Anmeldetag: 04.06.1997
(51) Int. Cl.: F16D 59/02

(54) **Elektromagnetisch betätigte Bremse**
Electromagnetically actuated brake
Frein à actionnement électromagnétique

(30) Priorität: 08.06.1996 DE 19622983
(43) Veröffentlichungstag der Anmeldung: 10.12.1997
(73) Patentinhaber: SEW-EURODRIVE GMBH & CO., D-76646 Bruchsal (DE)
(72) Erfinder: Fischer, Horst, 76698 Ubstadt-Weiher (DE)
(74) Vertreter: Bohnenberger, Johannes, Dr.

(56) Entgegenhaltungen:
- DE-A- 2 840 565
- DE-A- 4 126 672
- DE-U- 8 913 767
- US-A- 4 823 926

## Beschreibung

Die Erfindung betrifft eine elektromagnetisch betätigte Bremse mit einem aus einer Erregerspule und einem Magnetkörper gebildeten Elektromagneten, mit einer zwischen Magnetkörper und einer Bremsscheibe axial bewegbaren Ankerscheibe und mit einer zwischen Ankerscheibe und Magnetkörper angeordneten Dämpfungsscheibe aus federndem Metall.

Bei einer derartigen Bremse sitzt die Bremsscheibe in der Regel auf der Welle eines Motors. Die drehfeste Ankerscheibe ist durch die Magnetkraft von der Bremsscheibe abhebbar, so daß dann die Bremsscheibe mit dem Motor frei umlaufen kann. Zum Bremsen wird der Elektromagnet entregt, so daß die mit einem Gehäuse drehfest verbundene Ankerscheibe unter Wirkung von im Magnetkörper eingesetzten Spiralfedern zum Bremsen gegen die Bremsscheibe drückt. Zur Verbesserung der Bremswirkung sind meistens Bremsbeläge auf der Bremsscheibe vorgesehen. Gegebenenfalls kann die Bremsscheibe durch die Ankerscheibe auch gegen eine gehäusefeste Anlagefläche gedrückt werden, wodurch höhere Bremsmomente erzielt werden.

Beim Er- bzw. Entregen des Elektromagneten trifft die Ankerscheibe mit relativ hoher Geschwindigkeit auf eine Polfläche des Magnetkörpers bzw. auf die Bremsscheibe, was zu erheblichen Schlaggeräuschen führt. Dies ist insbesondere der Fall bei schnell schaltenden und impulsmagnetisierenden Bremsen, bei denen aufgrund der vergrößerten Ankerscheiben-Geschwindigkeiten die Schlaggeräusche noch stärker in Erscheinung treten.

Es wurde schon versucht, die Schlaggeräusche dadurch zu verringern, daß der Anker aus einem lamellierten Blechpaket besteht (DE-OS 22 59 320). Zusätzlich wurden zur Verminderung des Schlaggeräusches bei der DE-OS 28 40 565 Tellerfedern am Magnetkörper zum Abbremsen der Ankerscheibe vorgesehen. Hierbei ist zu beachten, daß das lamellierte Blechpaket eine wesentlich geringere Stabilität als eine massive Ankerscheibe aufweist. Darüber hinaus ist der Geräuschreduzierungseffekt durch die Tellerfedern bei lamellierten Blechpaketen gering und bei massiven Ankerscheiben vernachlässigbar, so daß die Lösungen gerade bei impulsmagnetisierten Bremsen, die aufgrund der hohen Ankerscheiben-Geschwindigkeit und Kräfte eine sehr stabile Ankerplatte erfordern, nachteilig sind.

Aus der DE-GM 89 13 767 ist bekannt, die Ankerscheibe bei einer derartigen Bremse aus metallischen Einzelscheiben zusammenzusetzen, zwischen denen jeweils eine Schicht aus Dämpfungsmaterial angeordnet ist. Bei gleicher Masse wie eine massive Ankerscheibe reduziert sich auch bei dieser Ausführung deren Stabilität wesentlich. Soll andererseits eine zu einer massiven Ankerscheibe gleichwertige Stabilität erreicht werden, so ist eine wesentlich höhere Masse erforderlich, die sich wiederum nachteilig bei schnell schaltenden Bremsen auswirkt.

Eine gattungsgemäße Bremse ist aus der DE 41 26 672 A1 bekannt. Die dortige Dämpfungsscheibe zwischen Ankerscheibe und Magnetkörper weist eine Vielzahl punktförmiger Noppen auf. Es ist aufwendig, diese Noppen herzustellen.

Der Erfindung liegt die Aufgabe zugrunde, eine Bremse der gattungsgemäßen Art zu schaffen, die bei verbesserten, geräuschmindernden Eigenschaften konstruktiv einfacher herzustellen ist.

Erfindungsgemäß wird die genannte Aufgabe dadurch gelöst, daß die Dämpfungsscheibe in mindestens einem radial innerhalb der Erregerspule liegenden Dämpfungsbereich durch mindestens einen diesen umgebenden ringförmigen Abstandhalter im entregten Zustand der Erregerspule mit Abstand zur Ankerscheibe gehalten ist.

Die erfindungsgemäße Bremse ist nicht nur einfacher und billiger herzustellen, sondern ihre Dämpfungsscheibe weist gegenüber derjenigen der DE 41 26 672 A1 insbesondere den Vorteil auf, daß die Beanspruchung des Federstahles hinsichtlich der zulässigen Spannungswerte δ zul. besser bestimmbar ist und die Dämpfungsscheibe durch Variieren der Abmessungen besser auf Langzeit- oder Dauerfestigkeit ausgelegt oder der Grat der Dämpfwirkung verändert werden kann.

Die Dämpfungsscheibe ist durch die Abstandhalter als zwischen Ankerscheibe und Magnetkörper angeordnetes federndes Element ausgebildet, welches dauerhaft und sehr intensiv Schaltgeräusche reduziert, die entstehen, wenn die Ankerscheibe durch Erregung des Elektromagneten angezogen wird. Die kinetische Energie der Ankerscheibe wird auf die Dämpfungsscheibe übertragen und wird zum Teil durch Reibung in Wärme umgesetzt. Beim Anziehen der Ankerscheibe zum Lösen der Bremse gelangen zunächst die Dämpfungsbereiche der Dämpfungsscheibe an den Magnetkörper. Die Ankerscheibe selbst wird nur entgegen der durch die Dämpfungsscheibe ausgeübten Federkräfte und damit sanft und gegen die Dämpfungsbereiche und den Magnetkörper gezogen.

Bei der erfindungsgemäßen Ausgestaltung der Bremse können massive Ankerplatten verwendet werden. Da die Dämpfungsscheibe aus federndem Metall, vorzugsweise Federstahl, hergestellt ist, weist diese eine ausreichende Stabilität bei großer Belastung und eine lange Standzeit auf, so daß diese Art der Geräuschdämpfung insbesondere bei schnell schaltenden und impulsmagnetisierten Bremsen einsetzbar ist. Ein wesentlicher erfindungsgemäßer Vorteil liegt darin, daß die erforderlichen Einzelteile einfach und kostengünstig hergestellt werden können.

Eine Optimierung der Dämpfungsscheibendicke und der Höhe und Größe der Abstände der Dämpfungsbereiche von der Ankerscheibe ist durch einfache Versuche erreichbar. Die Abmessungen der funktionswesentlichen Teile richten sich nach der Stärke der Elektromagneten und der jeweiligen Bremsenbaugröße. Die Stärke der Dämpfungsscheibe liegt vorzugsweise zwischen 0,1 und 0,5 mm.

In bevorzugten Ausgestaltungen ist vorgesehen, daß ein Abstandhalter als zwischen Ankerscheibe und Dämpfungsscheibe angeordneter Zwischenring ausgebildet ist oder daß ein ringförmiger Abstandhalter als gegenüber den Dämpfungsbereichen und aus deren Ebene zur Ankerscheibe hin gerichtete Ringerhebung der Dämpfungsscheibe ausgebildet ist, wobei die Dämpfungsscheibe aus fertig gehärtetem Material gestanzt ist. In weiterer bevorzugter Ausgestaltung ist vorgesehen, daß Ankerscheibe und Dämpfungsscheibe im Bereich der Abstandhalter fest miteinander verbunden sind, wobei insbesondere gegenüber den Abstandhaltern in deren Bereich im Elektromagneten eine ringförmige Vertiefung ausgebildet ist und die ringförmige Vertiefung aus dem äußeren Teil des Spulenraumes des Magnetkörpers besteht. Die Verbindung von Ankerscheibe und Dämpfungsscheibe sowie gegebenenfalls separatem Abstandhalter bei einem kompletten Bauteil kann durch Nieten, Schweißen oder Kleben geschehen. Durch die feste Verbindung der Dämpfungsscheibe mit der Ankerscheibe wird weiterhin ein Klappgeräusch vermieden, welches bei einer freien Dämpfungsscheibe auftreten könnte.

Da zur erfindungsgemäßen Geräuschminderung bei den vorgenannten bevorzugten Ausgestaltungen lediglich die komplette Ankerscheibe mit Dämpfungsscheibe eingesetzt bzw. ausgestauscht wird, können gegebenenfalls auch ältere Bremsen nachgerüstet werden.

In alternativer Ausgestaltung kann vorgesehen sein, daß ein Abstandhalter durch ein ringförmiges Zwischenteil zwischen Magnetkörper und Dämpfungsscheibe gebildet ist oder daß ein ringförmiger Abstandhalter durch einen einen Federbereich umgebenden, aus der Ebene desselben heraus und auf den Magnetkörper zu gerichteten ringförmigen erhabenen Bereich gebildet ist, wobei weiterhin die Dämpfungsscheibe, gegebenenfalls unter Zwischenlage eines Abstandhalters, fest mit dem Magnetkörper verbunden ist und insbesondere gegenüber dem ringförmigen Abstandhalter in der Ankerscheibe eine ringförmige Vertiefung ausgebildet ist.

Weitere bevorzugte Ausgestaltungen sehen mindestens zwei konzentrisch zueinander angeordnete Abstandhalter vor.

Bevorzugt ist die Dämpfungsscheibe einstückig hergestellt. Dies ermöglicht eine einfache und kostengünstige Produktion. Sie kann aber auch aus zwei oder mehr Teilen geschaffen sein.

Um günstige magnetische Verhältnisse für die Ankerscheibe zu gewährleisten, ist in einer äußerst bevorzugten Ausgestaltung vorgesehen, daß die Dämpfungsscheibe magnetisierbar ist. Hierzu wird entweder ein paramagnetischer oder ferromagnetischer Stahl verwendet. Wird die Dämpfungsscheibe aus ferro- oder paramagnetischem Stahl hergestellt, so wird der magnetische Widerstand des Magnetkreises nur geringfügig vergrößert, da der magnetische Fluß in der Scheibe ohne Verluste geleitet wird. Bei antimagnetischem Werkstoff entspricht dies einem größeren Luftspalt und einer Vergrößerung des magnetischen Widerstandes. Die Folge wäre eine Vergrößerung der Durchflutung der Bremsspule.

Um insbesondere auch bei Entregen des Elektromagneten, d.h. beim Schließen der Bremse, eine Geräuschminderung zu bewirken, zeichnet sich eine bevorzugte Ausführungsform dadurch aus, daß die Bremsscheibe metallische Einzelscheiben aufweist, zwischen denen ein Dämpfungselement angeordnet ist, wobei insbesondere das Dämpfungselement aus elastischem Dämpfungsmaterial besteht oder aber das Dämpfungselement eine mit Erhebungen versehene Scheibe aus federndem Metall ist. Im letztgenannten Falle sehen Weiterbildungen vor, daß die Erhebungen noppenförmig sind oder aber daß die Erhebungen ringförmig sind.

Weitere Vorteile und Merkmale der Erfindung ergeben sich aus den Ansprüchen und aus der nachfolgenden Beschreibung, in der ein bevorzugtes Ausführungsbeispiel der Erfindung unter Bezugnahme auf die Zeichnung im einzelnen erläutert ist. Dabei zeigt:
- Fig. 1: eine Schnittdarstellung einer erfindungsgemäßen Bremse;
- Fig. 2: einen vergrößerten Ausschnitt der Fig. 1 im Bremszustand;
- Fig. 3: den vergrößerten Ausschnitt wie Fig. 2 bei gelüfteter Bremse; und

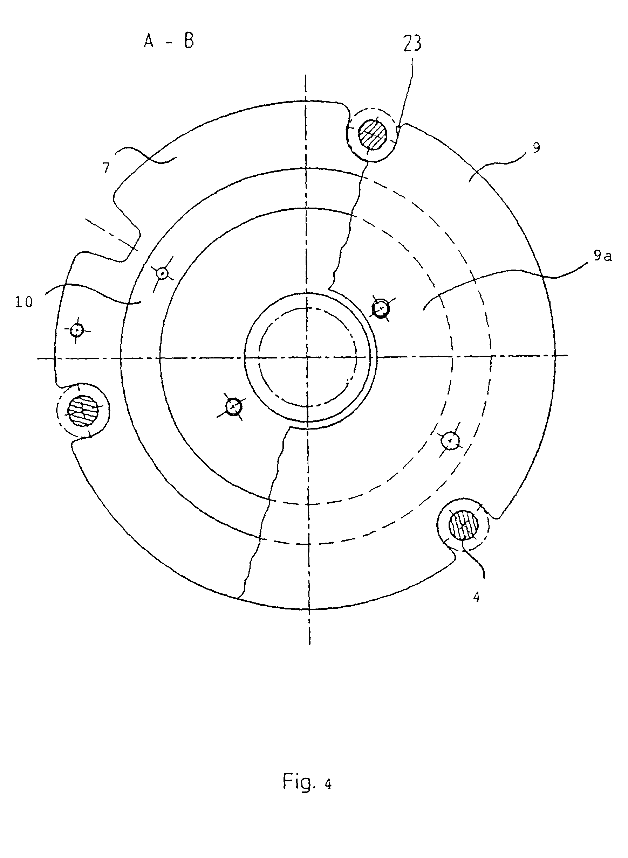

- Fig. 4: eine Draufsicht auf eine Ankerscheibe mit halb aufgeschnittener Dämpfungsscheibe gemäß der Erfindung.

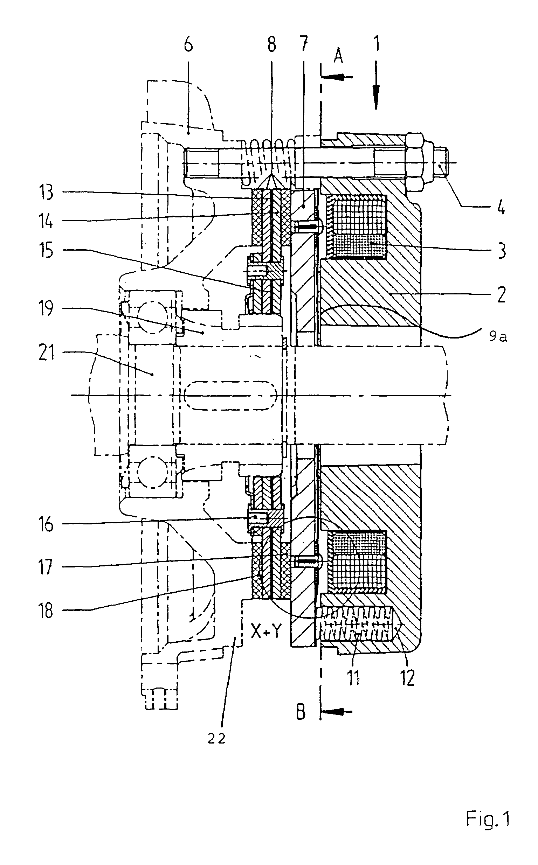

Eine Bremse nach Fig. 1 weist einen Elektromagneten 1 mit einem Magnetkörper 2 auf, in den eine Erregerspule 3 eingebracht ist. Der Magnetkörper 2 ist mittels Bolzen 4 an einem stationären Gehäuseteil 6 der Bremse befestigt. Zwischen Magnetkörper 2 und Gehäuseteil 6 sind eine Ankerscheibe 7 und eine Bremsscheibe 8 angeordnet.

Zwischen der Ankerscheibe 7 und dem Magnetkörper 2 ist eine Dämpfungsscheibe 9 angeordnet. Die Dämpfungsscheibe 9 weist in einem zentralen Dämpfungsbereich 9a im unbelasteten Zustand, also bei entregtem Elektromagneten, einen endlichen Abstand zur Ankerscheibe 7 (und auch zum Magnetkörper 2) auf. Im dargestellten Ausführungsbeispiel wird der Abstand zur Ankerscheibe 7 durch einen ringförmigen Abstandhalter 10 in Form eines ringförmigen Zwischenteils sichergestellt. Der Abstandhalter 10 kann aus Stahlblech, Preßspan oder einem anderen harten Werkstoff hergestellt sein. Beim Auftreffen der Ankerscheibe 7 auf den Magnetkörper 2 wirkt die Dämpfungsscheibe 9 gezwungenermaßen als Feder. Durch das Zusammenwirken von Dämpfungsscheibe 9, Abstandhalter 10 und Ringnut 24 entsteht eine federnde Einheit. Die Dämpfungsscheibe 9 sitzt im nichterregten Zustand des Magnetkörpers 2 plan auf dem Abstandhalter 10 der Ankerscheibe 7 auf.

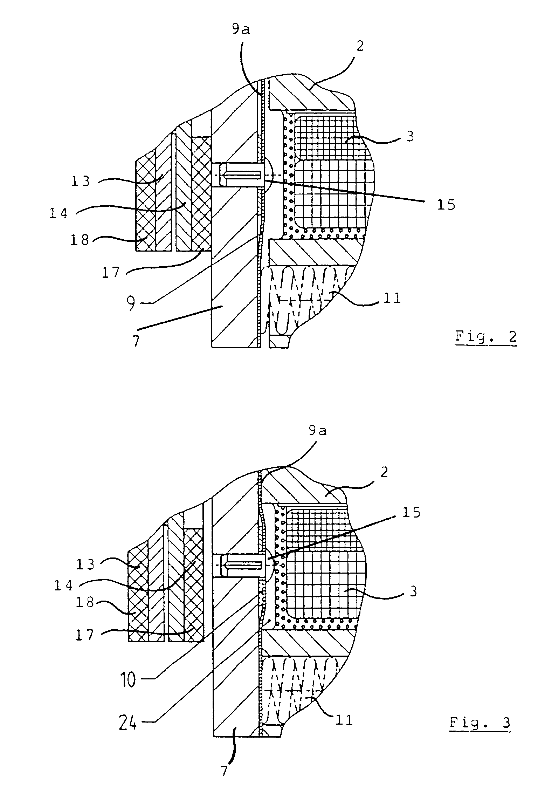

Der ringförmige Abstandhalter 10 ist gegenüber dem Spulenraum des Magnetkörpers 2 ausgebildet, in dem sich die Erregerspule 3 befindet. Die äußere Stirnseite der Erregerspule 3 fluchtet nicht mit der der Ankerscheibe 7 zugewandten Stirnseite des Magnetkörpers 2, sondern ist gegenüber der genannten Stirnseite des Magnetkörpers 2 etwas zurückversetzt, so daß am freien oder äußeren Ende des Spulenraumes ein umlaufender oder ringförmiger Freiraum oder eine Vertiefung im Magnetkörper 2 ausgebildet ist. Dies erlaubt die Dämpfungsscheibe 9 an der Ankerscheibe 7 festlegenden, nietenförmigen Befestigungselementen, dem Abstandhalter 10 sowie dem auf diesem aufliegenden Bereich der Dämpfungsscheibe 9, in den Ringraum einzutreten, wenn die Ankerscheibe gegen den Magnetkörper 2 gezogen wird und dabei die Dämpfungsscheibe in ihrem Dämpfungsbereich 9a fest zwischen sich und dem Magnetkörper einschließt (Fig. 3).

Im dargestellten Ausführungsbeispiel sind die Ankerscheibe 7, der ringförmige Abstandhalter 10 und die Dämpfungsscheibe 9 durch Halbrundkerbnägel 15 verbunden und gemeinsam axial beweglich und werden von Schraubenfedern 11, die in Ausnehmungen 12 des Magnetkörpers 2 angeordnet sind, von diesem fortgedrückt. Auch andere Nietverbindungen als die Halbrundkerbnägel 15 sind möglich. Alternativ kann die Dämpfungsscheibe 9 auch am Magnetkörper 2 befestigt sein. Für die Montage ist es jedoch vorteilhaft, wenn Dämpfungsscheibe 9 und Ankerscheibe 7 eine Einheit bilden.

Die vorgesehene Bremsscheibe 8 besteht vorzugsweise aus zwei Metallscheiben 13 und 14, zwischen denen ein dämpfendes Element 15 in Form einer Dämpfungsschicht angeordnet ist.

Die Scheiben 13 und 14 sind durch Niete 16 miteinander verbunden, so daß die Scheiben 13 und 14 unter Kompression des Dämpfungselements 15 aufeinanderzubewegbar sind. Jede Scheibe 13 und 14 weist Bremsbeläge 17 und 18 auf. Die Bremsscheibe 8 ist über einen Mitnehmer 19 und eine Welle 21 drehfest mit einem nicht dargestellten Motor verbunden.

Zum Lösen der Ankerscheibe 7 von der Bremsscheibe 8, d.h. zum Lösen der Bremse, wird durch einen Stromfluß durch die Spule 3 der Elektromagnet 1 erregt und die Ankerscheibe 7 und damit auch die Dämpfungsscheibe 9 gegen die Kraft der Federn 11 bis zum Anschlag am Magnetkörper 2 von der Bremsscheibe 8 fortbewegt. Der Abstandhalter 10 kann grundsätzlich auch einstückig an der Ankerscheibe 7 ausgebildet sein.

Die Dämpfungsscheibe 9 in Verbindung mit dem Abstandhalter 10 verhindert dabei ein direktes Aufschlagen der Ankerscheibe 7 auf den Magnetkörper 2, da die Dämpfungsscheibe 9 durchfedert und die kinetische Energie der Ankerscheibe 7 aufnimmt, wobei, wie gesagt, der Niet, der Abstandhalter 10 und der auf diesem aufliegende Bereich der Dämpfungsscheibe 9 in den Freiraum über der Erregerspule 3 eintreten können.

Dies hat zur Folge, daß das Abschaltgeräusch wesentlich verringert wird. Die Bremsscheibe 8 wird auf diese Art und Weise freigegeben und der Motor kann umlaufen.

Zum Bremsen wird die Spule 3 des Elektromagneten 1 entregt, so daß die Spiralfeder 11, die Dämpfungsscheibe 9 und die Ankerscheibe 7 gegen den Bremsbelag 17 der Bremsscheibe 8 und deren abgewandte Seite mit dem Bremsbelag 18 gegen eine gehäusefeste Anlagefläche 22 drücken. Das durch die auf die Bremsscheibe 8 auftreffende Ankerscheibe 7 verursachte Geräusch wird durch das Dämpfungselement 15, das auch eine Federstahl-Dämpfungsscheibe sein kann, wesentlich gedämpft. Ein Mitdrehen der Ankerscheibe 7 wird beispielsweise dadurch verhindert, daß sie Ausnehmungen 23 aufweist, die von den stationären Bolzen 4 durchdrungen werden.

Fig. 2 zeigt eine Draufsicht auf das erfindungsgemäße Dämpfungselement bestehend aus Ankerscheibe 7, ringförmigem Abstandhalter 10 und Dämpfungsscheibe 9.

Die Scheiben 7 und 9 weisen randseitig Ausnehmungen 23 auf, durch die bei zusammengebauter Bremse die Bolzen 4 geführt sind.

Bei der erfindungsgemäßen Ausbildung werden Impulsschalldruckpegelsenkungen von bis zu 15 dBA erzielt.

## Patentansprüche

1. Elektromagnetisch betätigte Bremse mit einem aus einer Erregerspule (3) und einem Magnetkörper (2) gebildeten Elektromagneten, mit einer zwischen Magnetkörper (2) und einer Bremsscheibe (8) axial bewegbaren Ankerscheibe (7) und mit einer zwischen Ankerscheibe (7) und Magnetkörper (2) angeordneten Dämpfungsscheibe (9) aus federndem Metall, **dadurch gekennzeichnet, daß** die Dämpfungsscheibe (9) in mindestens einem radial innerhalb der Erregerspule (3) liegenden Dämpfungsbereich (9a) durch mindestens einen diesen umgebenden ringförmigen Abstandhalter (10) im entregten Zustand der Erregerspule (3) mit Abstand zur Ankerscheibe (7) gehalten ist.

2. Bremse nach Anspruch 1, **dadurch gekennzeichnet, daß** ein Abstandhalter (10) als zwischen Ankerscheibe (7) und Dämpfungsscheibe (9) angeordneter Zwischenring ausgebildet ist.

3. Bremse nach Anspruch 1, **dadurch gekennzeichnet, daß** ein ringförmiger Abstandhalter (10) als gegenüber den Dämpfungsbereichen (9a) und aus deren Ebene zur Ankerscheibe (7) hin gerichtete Ringerhebung der Dämpfungsscheibe (9) ausgebildet ist.

4. Bremse nach einem der Ansprüche 1 bis 3, **dadurch gekennzeichnet, daß** Ankerscheibe (7) und Dämpfungsscheibe (9) im Bereich der Abstandhalter (10) fest miteinander verbunden sind.

5. Bremse nach einem der vorangehenden Ansprüche, **dadurch gekennzeichnet, daß** gegenüber den Abstandhaltern (10) in deren Bereich im Elektromagneten (1) eine ringförmige Vertiefung (24) ausgebildet ist.

6. Bremse nach Anspruch 5, **dadurch gekennzeichnet, daß** die ringförmige Vertiefung (24) aus dem äußeren Teil des Spulenraumes des Magnetkörpers (2) besteht.

7. Bremse nach Anspruch 1, **dadurch gekennzeichnet, daß** ein Abstandhalter (10) durch ein ringförmiges Zwischenteil zwischen Magnetkörper (2) und Dämpfungsscheibe (9) gebildet ist.

8. Bremse nach Anspruch 1, **dadurch gekennzeichnet, daß** ein ringförmiger Abstandhalter durch einen einen Federbereich (9a) umgebenden, aus der Ebene desselben heraus und auf den Magnetkörper (2) zu gerichteten ringförmigen erhabenen Bereich gebildet ist.

9. Bremse nach Anspruch 1, 7 oder 8, **dadurch gekennzeichnet, daß** die Dämpfungsscheibe (9), gegebenenfalls unter Zwischenlage eines Abstandhalters (10), fest mit dem Magnetkörper (2) verbunden ist.

10. Bremse nach einem der Ansprüche 7 bis 9, **dadurch gekennzeichnet, daß** gegenüber dem ringförmigen Abstandhalter (10) in der Ankerscheibe (7) eine ringförmige Vertiefung ausgebildet ist.

11. Bremse nach einem der vorangehenden Ansprüche, **gekennzeichnet durch** mindestens zwei konzentrisch zueinander angeordnete Abstandhalter (10).

12. Bremse nach einem der vorangehenden Ansprüche, **dadurch gekennzeichnet, daß** die Dämpfungsscheibe (9) magnetisierbar ist.

13. Bremse nach einem der vorangehenden Ansprüche, **dadurch gekennzeichnet, daß** die Bremsscheibe (8) metallische Einzelscheiben (13, 14) aufweist, zwischen denen ein Dämpfungselement (15) angeordnet ist.

14. Bremse nach Anspruch 13, **dadurch gekennzeichnet, daß** das Dämpfungselement (15) aus elastischem Dämpfungsmaterial besteht.

15. Bremse nach Anspruch 13, **dadurch gekennzeichnet, daß** das Dämpfungselement (15) eine mit Erhebungen versehene Scheibe aus federndem Metall ist.

16. Bremse nach Anspruch 15, **dadurch gekennzeichnet, daß** die Erhebungen noppenförmig sind.

17. Bremse nach Anspruch 15, **dadurch gekennzeichnet, daß** die Erhebungen ringförmig sind.

## Claims

1. Electromagnetically operated brake with an electromagnet formed from a field coil (3) and a magnetic body (2), with an armature disc (7), which can move axially between the magnetic body (2) and a brake disc (8), and with a damping disc (9) of a resilient metal, which is disposed between the armature disc (7) and the magnetic body (2), **characterised in that** the damping disc (9) is held at a spacing from the armature disc (7) in at least one damping region (9a), which lies radially inside the field coil (3), by at least one annular spacer (10), which surrounds the damping region, when the field coil (3) is in the de-energised state.

2. Brake according to Claim 1, **characterised in that** one spacer (10) is formed as an intermediate ring disposed between the armature disc (7) and the damping disc (9).

3. Brake according to Claim 1, **characterised in that** one annular spacer (10) is formed as an annular elevation, which is directed opposite to the damping regions (9a) and out of the plane thereof towards the armature disc (7), of the damping disc (9).

4. Brake according to any one of Claims 1 to 3, **characterised in that** the armature disc (7) and the damping disc (9) are firmly connected together in the region of the spacers (10).

5. Brake according to any one of the preceding Claims, **characterised in that** an annular depression (24) is formed opposite the spacers (10) in the region thereof in the electromagnet (1).

6. Brake according to Claim 5, **characterised in that** the annular depression (24) consists of the outer part of the coil space of the magnetic body (2).

7. Brake according to Claim 1, **characterised in that** one spacer (10) is formed by an annular intermediate part between the magnetic body (2) and the damping disc (9).

8. Brake according to Claim 1, **characterised in that** one annular spacer is formed by an annular raised region which surrounds a spring region (9a) and is directed out of the plane thereof and towards the magnetic body (2).

9. Brake according to Claim 1, 7 or 8, **characterised in that** the damping disc (9) is firmly connected to the magnetic body (2), optionally with a spacer (10) being positioned in between.

10. Brake according to any one of Claims 7 to 9, **characterised in that** an annular depression is formed opposite the annular spacer (10) in the armature disc (7).

11. Brake according to any one of the preceding Claims, **characterised by** at least two spacers (10) disposed concentrically with one another.

12. Brake according to any one of the preceding Claims, **characterised in that** the damping disc (9) can be magnetised.

13. Brake according to any one of the preceding Claims, **characterised in that** the brake disc (8) comprises metallic individual discs (13, 14), between which a damping element (15) is disposed.

14. Brake according to Claim 13, **characterised in that** the damping element (15) consists of elastic damping material.

15. Brake according to Claim 13, **characterised in that** the damping element (15) is a disc, provided with elevations, of a resilient metal.

16. Brake according to Claim 15, **characterised in that** the elevations are in the form of knobs.

17. Brake according to Claim 15, **characterised in that** the elevations are annular.

## Revendications

1. Frein à actionnement électromagnétique comportant un électro-aimant constitué d'une bobine d'excitation (3) et d'un corps magnétique (2) avec, un disque d'induit (7) mobile dans le sens axial entre le corps magnétique (2) et un disque de frein (8), et un disque d'amortissement (9) en métal élastique disposé entre le disque d'induit (7) et le corps magnétique (2), **caractérisé en ce que** lorsque la bobine d'excitation (3) est désexcitée, le disque d'amortissement (9) est maintenu à distance du disque d'induit (7) au moins dans une zone d'amortissement (9a) située à l'intérieur de la bobine d'excitation (3) dans le sens radial, par au moins une pièce d'écartement (10) annulaire entourant celui-ci.

2. Frein selon la revendication 1, **caractérisé en ce qu'**une pièce d'écartement (10) est conformée en anneau intermédiaire disposé entre le disque d'induit (7) et le disque d'amortissement (9).

3. Frein selon la revendication 1, **caractérisé en ce qu'**une pièce d'écartement (10) est conformée en surhaussement annulaire du disque d'amortissement (9) par rapport aux zones d'amortissement (9a) et faisant saillie par rapport au plan de ces dernières en direction du disque d'induit (7).

4. Frein selon l'une des revendications 1 à 3, **caractérisé en ce que** le disque d'induit (7) et le disque d'amortissement (9) sont assemblés de manière fixe l'un à l'autre dans la zone des pièces d'écartement (10).

5. Frein selon l'une des revendications précédentes, **caractérisé en ce qu'**un creux annulaire (24) est formé dans l'électro-aimant (1) en regard des pièces d'écartement (10) dans leur zone.

6. Frein selon la revendication 5, **caractérisé en ce que** le creux annulaire (24) est constitué par la partie extérieure de l'espace de bobine du corps magnétique (2).

7. Frein selon la revendication 1, **caractérisé en ce qu'**une pièce d'écartement (10) est formée par une pièce intermédiaire annulaire entre le corps magnétique (2) et le disque d'amortissement (9).

8. Frein selon la revendication 1, **caractérisé en ce qu'**une pièce d'écartement annulaire est formée par une zone annulaire surélevée, entourant une zone élastique (9a), faisant saillie par rapport au plan de celle-ci et orientée vers le corps magnétique (2).

9. Frein selon la revendication 1, 7 ou 8, **caractérisé en ce que** le disque d'amortissement (9) est assemblé de manière fixe au corps magnétique (2), une pièce d'écartement (10) étant le cas échéant intercalée.

10. Frein selon l'une des revendications 7 à 9, **caractérisé en ce qu'**un creux annulaire est formé dans le disque d'induit (7) en regard des pièces d'écartement (10).

11. Frein selon l'une des revendications précédentes, **caractérisé par** au moins deux pièces d'écartement disposées (10) de manière concentrique l'une par rapport à l'autre.

12. Frein selon l'une des revendications précédentes, **caractérisé en ce que** le disque d'amortissement (9) peut être aimanté.

13. Frein selon l'une des revendications précédentes, **caractérisé en ce que** le disque de frein (8) comporte des disques métalliques distincts (13, 14), entre lesquels est disposé un élément d'amortissement (15).

14. Frein selon la revendication 13, **caractérisé en ce que** l'élément d'amortissement (15) est constitué de matériau d'amortissement élastique.

15. Frein selon la revendication 13, **caractérisé en ce que** l'élément d'amortissement (15) est un disque en métal élastique doté d'élévations.

16. Frein selon la revendication 15, **caractérisé en ce que** les élévations ont la forme de boutons.

17. Frein selon la revendication 15, **caractérisé en ce que** les élévations sont de forme annulaire.
